# EUROPEAN PATENT SPECIFICATION

(11) **EP 2 478 976 B1**
(45) Date of publication and mention of the grant of the patent: **07.05.2014**
(21) Application number: 10817316.2
(22) Date of filing: 15.09.2010
(51) Int. Cl.: B21C 47/34, B21C 47/26, B21C 47/00

(54) **SLIT BAND PLATE MEANDERING PREVENTING DEVICE**
VORRICHTUNG ZUR VERHINDERUNG DES MÄANDERNS EINER SCHLITZBANDPLATTE
DISPOSITIF DE PRÉVENTION DU SERPENTAGE DES PLAQUES EN BANDE FENDUES

(30) Priority: 15.09.2009 JP 2009212926
(43) Date of publication of application: 25.07.2012
(73) Proprietor: JFE Steel Corporation, Tokyo, 100-0011 (JP)
(72) Inventor: YAMASHITA, Koji, Tokyo 100-0011 (JP); NARA, Tadashi, Tokyo 100-0011 (JP); HATAKEYAMA, Seishi, Tokyo 100-0011 (JP)
(74) Representative: Stebbing, Timothy Charles
(86) International application number: PCT/JP2010/066473
(87) International publication number: WO 2011/034204

(56) References cited:
- FR-A- 1 375 761
- FR-A- 1 468 856
- JP-A- 5 338 872
- JP-A- 10 230 319
- JP-U- H0 180 206

## Description

### [Technical Field]

The present invention relates to apparatuses to prevent strip zigzagging in the width direction (hereinafter called walking) of slit strips. More particularly, the present invention relates to an apparatus for preventing strip walking used to stably pass a strip by suppressing strip walking and stably coil the strip while avoiding formation of a telescoped coiled strip. Here, to slit means to divide a strip in a strip width direction. The slit strips are strips that are slit, and are also called slit materials.

The present invention is particularly advantageous when a leading end or a tail end of a strip, at which tension decreases, is passed during an operation. The tension decreases in, for example, a cold rolling line, a continuous processing line, or a slit line of a steel strip when the steel strip is subjected to shear cutting immediately before coiling finishes. The strips to which the present invention may be applied include metal strips, such as steel strips, and sheet-shaped plastic films.

### [Background Art]

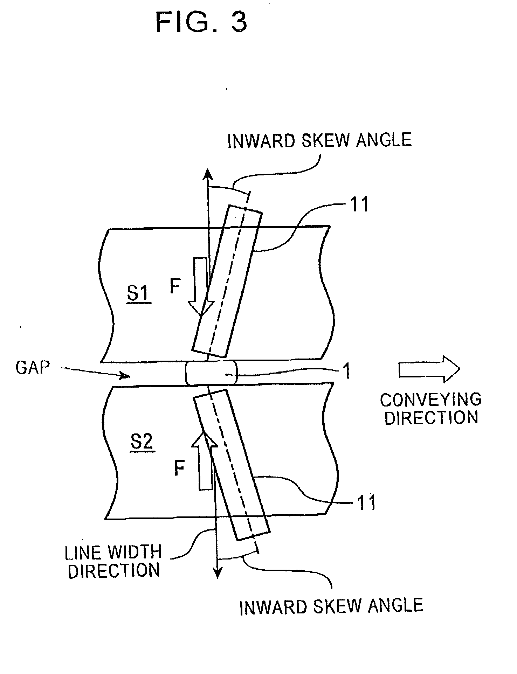

Here, "nip" means a contact zone in which a conveying roll or a pinch roll is in contact with a strip. In addition, "roll skew angle" means a skew angle at which rolls are skewed with respect to a strip conveying direction. A skew angle at which the rolls are skewed outward with respect to a pass center is called an outward skew angle, and a skew angle at which the rolls are skewed inward with respect to the pass center is called an inward skew angle. Fig. 3 illustrates an example of an inward skew angle.

To produce a narrow strip, a slitter may be arranged at an entrance side of a coiler in a recoiling line, and a rolled strip having a large width may be divided into separate strips in a strip width direction. The thus-obtained separate strips are coiled individually. The following are examples of the background art regarding such a slit line:

### (1) Apparatus including separator disks (PTL 1)

In this apparatus, a strip S that has been fed is trimmed by side trimmers at the sides thereof in a strip width direction, and is cut by a slitter at a central position thereof in the strip width direction so that the strip S is divided into two slit materials S1 and S2. The slit materials S1 and S2 are passed through a deflector roll and coiled by a single coiler while a slit gap is maintained by separator disks.

### (2) Apparatus including guide means

On a conveying table roller between a finishing mill and a coiler in a hot rolling line, the tension is eliminated after the tail end of the steel strip leaves the finishing mill. Accordingly, an unstable operation may occur in which the tail end of the steel strip undulates or strip walking in the strip width direction occurs. Guide means, such as a side guide, is use to suppress such an operation. Similarly, a method of forcibly restraining a strip with guide means, such as a side guide, is also used in a general strip-passing line to retain the tail end of the strip at a line center position.

### (3) Apparatus including edge position control (EPC) device (PTL 1)

In this apparatus, the two slit materials S1 and S2 are individually coiled by respective coilers. The positions of the sides (edges) of the slit materials S1 and S2 in the strip width direction immediately before the slit materials S1 and S2 are coiled are detected by respective edge sensors. The slit gap is adjusted by moving coiling shafts in the respective coilers in the strip width direction in accordance with the amounts of movement of the edges. Thus, the operation speed of the line can be increased.

### (4) Apparatus including skew rolls (PTL 1)

This apparatus includes a single coiler and left and right skew rolls that are respectively in contact with the two slit materials S1 and S2. The left and right skew rolls are arranged to have the same skew angle, and the skew angle is varied such that a detection value obtained by a slit gap detector approaches a desired value. Thus, the slit gap is adjusted and maintained so as to achieve an excellent coiling appearance that edge becomes complete.

### (5) Apparatus including pinch roll capable of performing biased pinch adjustment (PTL 2)

In this apparatus, each of a plurality of slit materials is provided with a pinch roll that is located between a slitter and a tension reel (coiler) and that is capable of performing a biased pinch adjustment. Owing to the biased pinch adjustment, the slit materials are guided in a direction away from the line center. When biased pinch (partial pinch) is applied to each slit material in an area near the line center, rotation moment is generated in a direction such that the slit gap increases. Conversely, when biased pinch (partial pinch) is applied to each slit material at the outer sides of the line, rotation moment is generated in a direction such that the slit gap decreases.

### [Citation List]

### [Patent Literature]

[PTL 1] Japanese Unexamined Patent Application Publication No. 3-5017
[PTL 2] Japanese Unexamined Patent Application Publication No. 10-230319

### [Summary of Invention]

### [Technical Problem]

According to example (1) of the background art, if the slit gap varies in accordance with the properties of the slit materials S1 and S2, sufficient adjustment cannot be made by the separator disks. Since the slit materials are not retained by a pinch roll or the like, if the strip side portions come into contact with the separator disks, the slit materials will be bent in the vertical direction and the strip side portions will be easily damaged. If the slit gap becomes too small, the strip side portions at both sides of the slit gap will be deformed by being pressed against the separator disks. Conversely, if the slit gap becomes too large, a coiling failure or a non-uniform edge alignment will occur. As a result, the line speed cannot be increased.

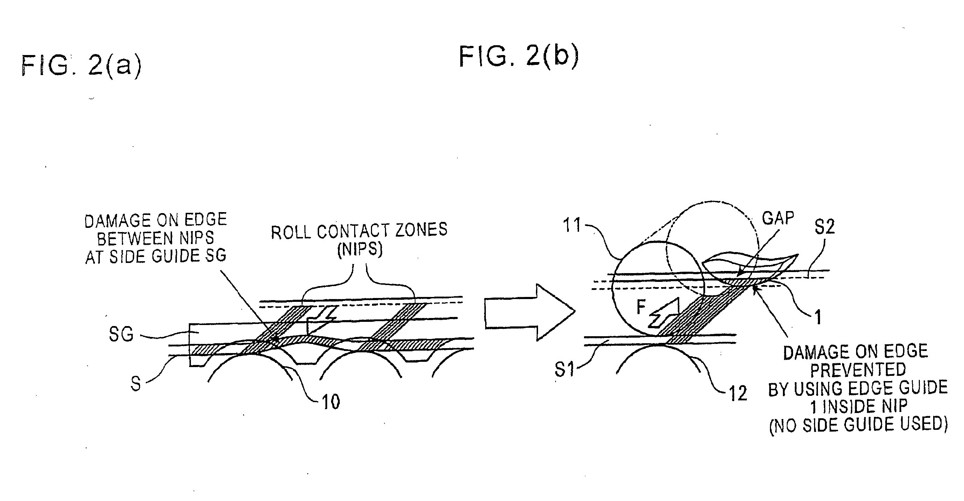

According to example (2) of the background art, damage on the edge of a strip will occur at a side portion of the strip when the strip comes into contact with, for example, a side guide. More specifically, as illustrated in Fig. 2(a), a side guide SG is placed in areas between a plurality of conveying rolls 10 that are adjacent to each other. Therefore, the side portion of the strip in the strip width direction is easily damaged in areas other than the nips. Therefore, in the case where the strip is restrained by the side guide, accurate position control must be performed in accordance with the strip width. In particular, when the strip thickness is small, accurate pressure control must be performed.

The method of suppressing the formation of a telescoped coiled strip by performing strip position control in the line width direction as in examples (3) to (5) of the background art have the following problems:
· A displacement occurs between a control target and an actual position in the width direction, owing to a time delay in which the strip travels from an upstream position to a downstream position.
· A complex control system is required.
· Even when the coiling process can be stabilized in a steady operation, the coiling process becomes unstable in an unsteady operation. More specifically, the tension applied to the slit material is eliminated and the behavior of the slit material becomes unstable at the tail end of the slit material after the shear cutting process, the tail end corresponding to the outermost periphery of a coil. Therefore, an existing EPC device or skew rolls cannot be used. Even when a strip edge is detected at an upstream position and the EPC is performed, the following problem occurs. That is, when a tension reel shaft is shifted in a strip width direction, there is a possibility that the tail end of the slit material will move together with the tension reel shaft in the same strip width direction. In such a case, the reel continuously follows the strip edge and divergence occurs within the movement limits of the reel in the width direction. As a result, the control cannot be performed and the coiling process becomes unstable.
· In the unsteady operation, the slit gap control based on the biased pinch cannot be performed because the pinch roll becomes unstable.

As described above, according to the background art, the slit strips cannot be stabilized at the central area of a conveyance line without damaging the edges of the strips or using a complex control system. In addition, it is difficult to perform a stable operation in an unsteady operation in which, for example, the tail end of a strip after the shear cutting process is passed.

### [Solution to Problem]

According to the present invention, to solve the above-described problems, mechanical means for preventing strip walking that is independent of external control is used. The present invention aims at a mechanical mechanism to prevent strip walking that can be easily adjusted, that is provided in, for example, a single roll so that the apparatus cost can be reduced, that can be used for both slit materials and normal strips (strips that are not slit), and in which the two usage patterns can be automatically or easily switched.

More specifically, the gist of the present invention is as follows.
[1]
   An apparatus for preventing strip walking which passes at least one slit strip, which is obtained by slitting a single full-width strip S into two strips S1 and S2 in a conveyance line, with pinch rolls, wherein the pinch rolls include a lower roll 12 that is adapted to support a bottom surface of the slit strip and an upper roll 11 that is adapted to come into contact with a top surface of the slit strip and move the slit strip toward a line center by using outside biased pinch or an inward skew angle, and wherein the apparatus for preventing strip walking comprises an edge guide 1 that is adapted to guide a line-center-side edge of the slit strip in and/or near the nip in which the strip is nipped by a central contact zone of the upper roll and the lower roll, the central contact zone in use coming into contact with a portion of the slit strip around the line-center-side edge.
[2]
   The apparatus for preventing strip walking according to [1], wherein the edge guide 1 is retractable, wherein the edge guide is movable downward to a position of contact with the lower roll 12 to guide the line-center-side edges of the slit strips S1 and S2 when the slit strips are passed, and wherein the edge guide is retractable to a top surface of the full-width strip S when the full-width strip is passed without being slit.
[3]
   The apparatus for preventing strip walking according to [1], wherein the edge guide 1 includes a large-diameter disc 1A that is coaxial with the upper roll 11 and that has a diameter larger than an outer diameter of the upper roll or the edge guide includes a tiered disc 1B including the large-diameter disc 1B2 and a contact zone 1B1 that is provided in place of the central contact zone of the upper roll and that has a diameter smaller than or equal to the outer diameter of the upper roll.
[4]
   The apparatus for preventing strip walking according to [2] or [3], wherein the edge guide 1 according to [2] or a disc portion 1A, 1B2 of the edge guide according to [3] is composed of a movable separate ring 1C that is loosely fitted to a roll shaft of the upper roll 11.
[5]
   The apparatus for preventing strip walking according to [2], wherein the edge guide 1 includes a groove portion 11A provided in a roll shaft of the upper roll 11 and a movable separate disc 1D that is loosely fitted to the groove portion.

### [Advantageous Effects of Invention]

According to the present invention, in the conveyance line of the slit strips, it is not necessary to perform high-response, high-accuracy feedback control for detecting and correcting strip walking, and the slit strips can be stabilized at the central area of the conveyance line with a simple structure. The edge guide used in the present invention is a center guide of a slit material (guide disposed at the slit cut side). Therefore, it is also not necessary to perform, for example, position control in accordance with the strip width. In addition, since portions of the strip edges that are located in and/or near the nip in which the strips are nipped by upper and lower rolls are guided, sufficient strip rigidity can be easily ensured and damage does not easily occur on the edges of the strips. Even in an unsteady operation in which, for example, the tail end of a strip that has been formed by shear cutting is passed and it is difficult to stably pass the strip by the feedback control, the strip can be easily passed in a stable state according to the present invention. In addition, the slit materials and the normal strips can both be passed, and switching between the slit materials and the normal strips can be easily performed.

### [Brief Description of Drawings]

[Fig. 1] Fig. 1 shows a schematic front view illustrating the basic concept of the present invention.
[Fig. 2(a)] Fig. 2(a) is a schematic perspective view illustrating the problem of the background art.
[Fig. 2(b)] Fig. 2(b) is a schematic perspective view illustrating the operational effects of the present invention.
[Fig. 3] Fig. 3 is a schematic plan view illustrating the definition of an inward skew angle.
[Fig. 4] Fig. 4 is a schematic front view illustrating an example of present invention [1].
[Fig. 5(a)] Fig. 5(a) is a schematic front view illustrating an example of the present invention.
[Fig. 5(b)] Fig. 5(b) is a schematic front view illustrating an example of the present invention.
[Fig. 6(a)] Fig. 6(a) is a schematic front view illustrating a slit material operation according to the present invention.
[Fig. 6(b)] Fig. 6(b) is a schematic sectional view illustrating the slit material operation according to the present invention.
[Fig. 6(c)] Fig. 6(c) is a schematic sectional view illustrating a normal strip operation according to the present invention.
[Fig. 7(a)] Fig. 7(a) is a schematic front view (partially sectioned front view) illustrating a slit material operation according to the present invention.
[Fig. 7(b)] Fig. 7(b) is a schematic sectional view illustrating the slit material operation according to the present invention.
[Fig. 7(c)] Fig. 7(c) is a schematic sectional view illustrating a normal strip operation according to the present invention.
[Fig. 8(a)] Fig. 8(a) is a schematic perspective view illustrating an apparatus for preventing strip walking according to Example 1 (in a slit material operation).
[Fig. 8(b)] Fig. 8(b) is a schematic perspective view illustrating the apparatus for preventing strip walking according to Example 1 (in a normal strip operation).
[Fig. 9(a)] Fig. 9(a) is a schematic perspective view illustrating an apparatus for preventing strip walking according to Example 2 (in a slit material operation, (b) illustrates a normal strip operation).
[Fig. 9(b)] Fig. 9(b) is a schematic perspective view illustrating the apparatus for preventing strip walking according to Example 2 (in a normal strip operation).
[Fig. 10] Fig. 10 is a time chart of PR pressure and outputs of strip walking sensors, illustrating an example of data of a strip walking measurement experiment using a model apparatus (having the structure illustrated in Fig. 5(a)).
[Fig. 11] Fig. 11 is a schematic front view illustrating an example of the present invention.
[Fig. 12] Fig. 12 is a diagram illustrating the definition of a location near the nip according to the present invention.
[Fig. 13] Fig. 13 is a diagram illustrating an example of an edge-guide pressing mechanism according to the present invention.
[Fig. 14] Fig. 14 is a diagram illustrating an example of an edge guide according to the present invention.

### [Description of Embodiments]

The basic concept of the present invention will now be described.

Strip walking of slit materials (slit strips, abbreviated as strips) is not controlled (feedback-controlled). Instead, the slit materials are mechanically moved toward the line center. An example of a method for mechanically moving the slit materials toward the line center is a method based on an outside biased pinch. In this method, a tiered roll is used as an upper pinch roll, the tiered roll having a large roll diameter only at the outer side.

The "biased pinch" means one side pinch in the strip width direction (partial pinch, one side pinch, etc.). According to the outside biased pinch, a frictional force applied between the pinch roll and the strips in the outside biased pinch areas is larger than that in the inside non-pinch areas. Therefore, moments that try to rotate the slit materials toward the line center are generated, and the slit materials are mechanically moved toward the line center.

Another example of a method for mechanically moving the slit materials toward the line center is a method based on an inward skew angle. In this method, upper rolls of the pinch roll are skewed inward with respect to a strip conveying direction. When the rolls are skewed inward, roll circumferential speed components that are oriented inward toward the line center are transmitted to the slit materials. Therefore, the slit materials are mechanically moved toward the line center.

If rolls according to the related art are used, strip walking occurs since a stable direction constantly changes in accordance with, for example, an entrance angle of each strip. In contrast, according to the present invention, it is not necessary to perform fine adjustments since the rolls are positively biased in a certain direction.

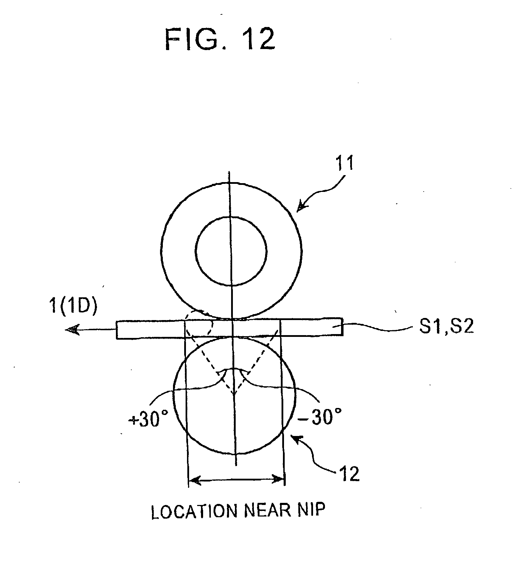

The positions of the slit materials, which are moved toward the line center, must be stabilized at an area around the line center, and the slit materials must be prevented from overlapping. Accordingly, an edge guide for the strips is provided. The edge guide is located in and/or near a nip of the pinch roll. Here, referring to Fig. 12, a location near the nip corresponds to a range on a strip surface including areas upstream and downstream of a line that connects the roll center and the nip center in the moving direction of the slit strips, the range corresponding to an angular range of ±30° around the roll center.

The present invention is characterized in that the edge guide is provided to restrain the strip edges that are located in and/or near the nip between the upper and lower rolls and that have an extremely high strip rigidity, so that the strips are prevented from being deformed even when the slit materials that have been moved toward the edge guide receive reactive forces from the edge guide.

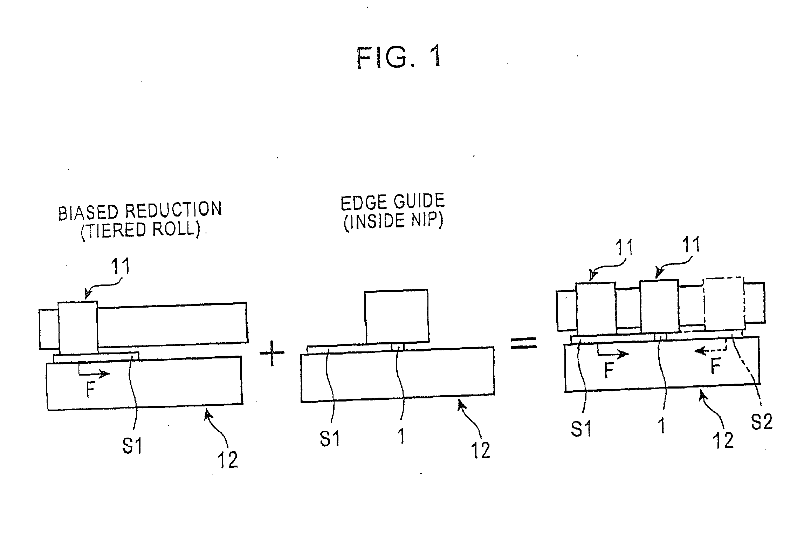

In other words, according to the present invention, for example, as illustrated in Fig. 1 which shows the structure based on the outside biased pinch, the rolls are positively biased so as to apply external forces F to the slit materials in directions toward the line center. The edge guide is provided near the line center so as to generate the reactive forces against the external forces F. In the present invention, side guides for guiding the edges of the strips at the outer sides of the line are not used.

Referring to Fig. 2, in the case where, for example, a side guide SG is used, there is a risk that the edge of a strip S will be damaged in an area between a nip and the next nip (Fig. 2(a)). In contrast, when the edge guide 1 is provided at the line-center sides of the strip edges that are located in and/or near the nip, the strips S1 and S2 are nipped between upper and lower rolls 11 and 12 in the pinch roll and have extremely high strip rigidity. Therefore, the edges of the strips are not damaged (Fig. 2(b)). From the viewpoint of obtaining high strip rigidity, of the strip edges that are located in and/or near the nip, the edge guide preferably restrains the strip edges that are located in the nip.

Referring to Fig. 3, the inward skew angle may be used instead of the biased pinch as means for applying the external forces F to the strips S1 and S2. In Fig. 3, the lower rolls are not illustrated. The inward skew angle for generating the external forces F may be appropriately set in accordance with the roll pinching force, and is preferably set to about 10° to 30°.

According to the above-described basic concept, in the slit-strip conveyance line (also referred to as a slit line), the slit strips can be stabilized at the central area of the conveyance line without damaging the edges of the strips. In addition, even in an unsteady operation in which, for example, the tail ends of the strips after the cutting process are passed, the strips can be easily passed in a stable state.

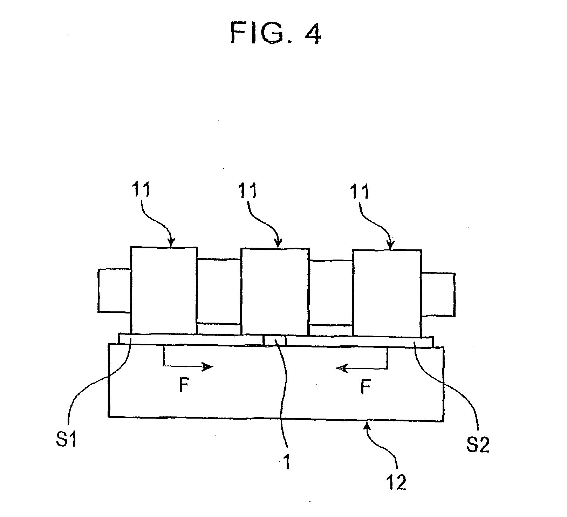

According to present invention [1] based on the above-described basic concept, as illustrated in Fig. 4, for example, which shows the structure based on the outside biased pinch, an apparatus for preventing strip walking passes the strips (slit strips or slit materials) S1 and S2, which are obtained by slitting a full-width strip into two strips in a conveyance line, with pinch rolls. The pinch rolls includes the lower roll 12 that supports the bottom surfaces of the strips S1 and S2 and the upper rolls 11 that come into contact with the top surfaces of the strips S1 and S2 and move the strips S1 and S2 toward the line center by applying the external forces F based on the outside biased pinch. The apparatus includes the edge guide 1 that guides line-center-side edges of the strips S1 and S2 that are located in and/or near the nip of the pinch rolls (in the nip in the example illustrated in Fig. 4).

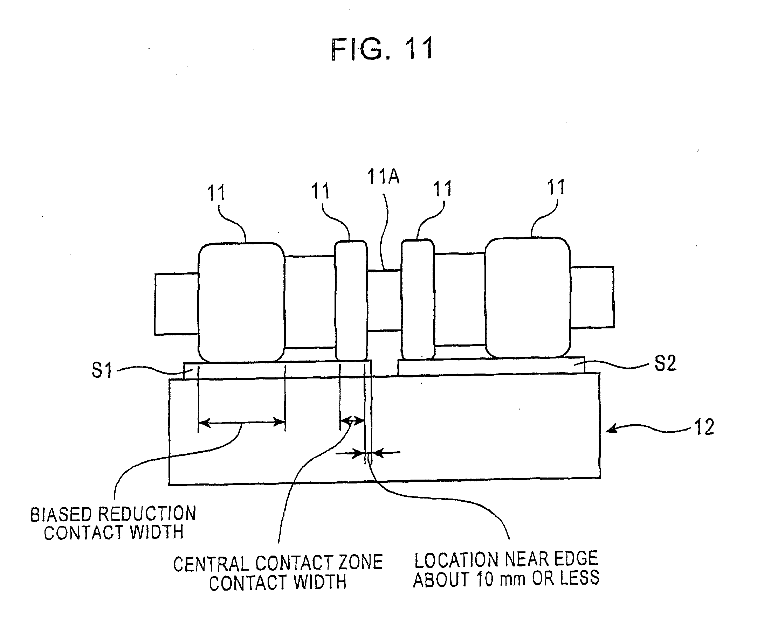

To generate the forces for moving the strips S1 and S2 toward the line center, it is necessary that the upper rolls have a central zone contact width that is smaller than an outside biased pinch contact width. As illustrated in Fig. 11, the central contact zone contact width of the upper rolls is 1/2 or less, preferably 1/4 or less, of the biased pinch contact width of the outside tiered rolls that perform the outside biased pinch. The central contact zones of the upper rolls preferably press the strips S1 and S2 at positions as close to the line-center-side edges thereof as possible, and ideally press the strips S1 and S2 over the areas including the edges. However, depending on the installation conditions of the upper rolls and the curvature of edge portions of the central contact zones of the upper rolls, there may be a case in which the central contact zones cannot press the areas including the edges. In such a case, portions near the edges are pressed within areas in which the amount of deformation of the strip edges can be maintained within an elastic range. More specifically, the locations near the edges may be positions separated from the edges toward the centers of the strips by about 10 mm. As illustrated in Fig. 11, the central contact zones of the upper rolls may be brought into contact with the slit strips at positions separated from the center-side edges of the slit strips toward the centers thereof by about 10 mm. The width of the edge guide is set to be less than or equal to a gap between the slit materials within a range in which sufficient strength is ensured.

The pinch rolls used in the present invention may have the structure in which the two slit materials are passed along both sides of the edge guide provided on the pinch rolls. However, the present invention is not limited to this. The pinch rolls may instead be structured such that only one of the two slit materials is passed along one side of the edge guide. For example, referring to Fig. 1, the present invention may also be applied to the structure in which only the slit material S1 is passed and the slit material S2 does not exist.

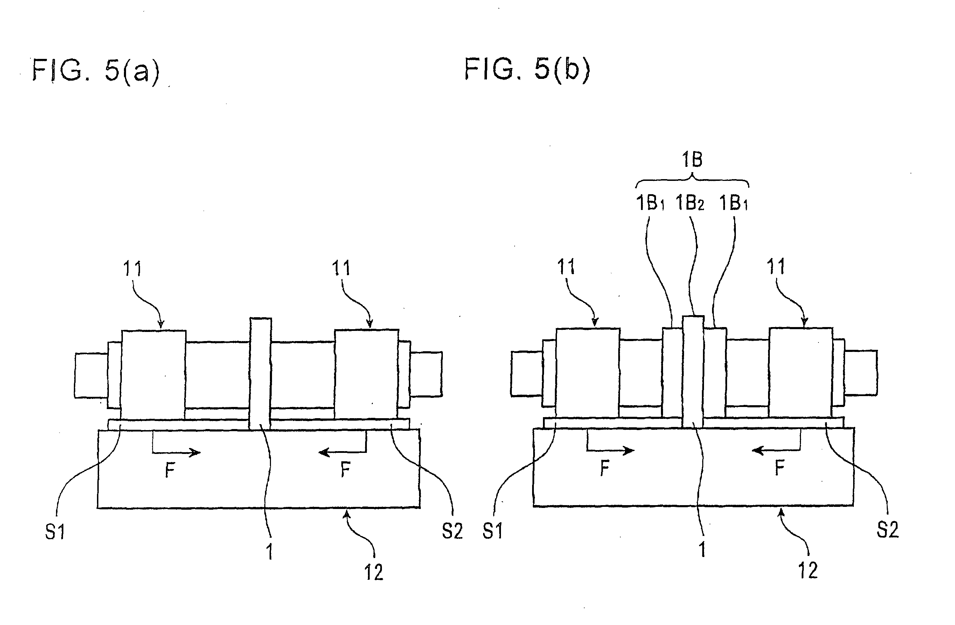

Fig. 5(a) illustrates the structure in which the edge guide is a large-diameter disc 1A that is coaxial with the upper rolls 11 and that has a diameter larger than the outer diameter of the upper rolls 11 by an amount less than twice the strip thickness. Fig. 5(b) illustrates the structure in which the edge guide is a tiered disc 1B including pinch portions 1B, having a diameter less than or equal to the outer diameter of the upper rolls 11 and a large-diameter disc portion 1B₂ having a diameter larger than the outer diameter of the upper rolls by an amount less than twice the strip thickness. In these examples, the edge guide is in a fixed state. Although the strip edges are not pressed in the nip in the example illustrated in Fig. 5(a), no problem occurs as long as the amount of deformation of the strip edges is within an elastic range. It has been confirmed that no problem occurs by model experiments. The amount of deformation of the strip edges varies depending on the strip thickness. Therefore, to achieve an apparatus that reliably prevents strip walking irrespective of the strip thickness, portions of the slit materials near the center-side edges are pressed in an actual apparatus.

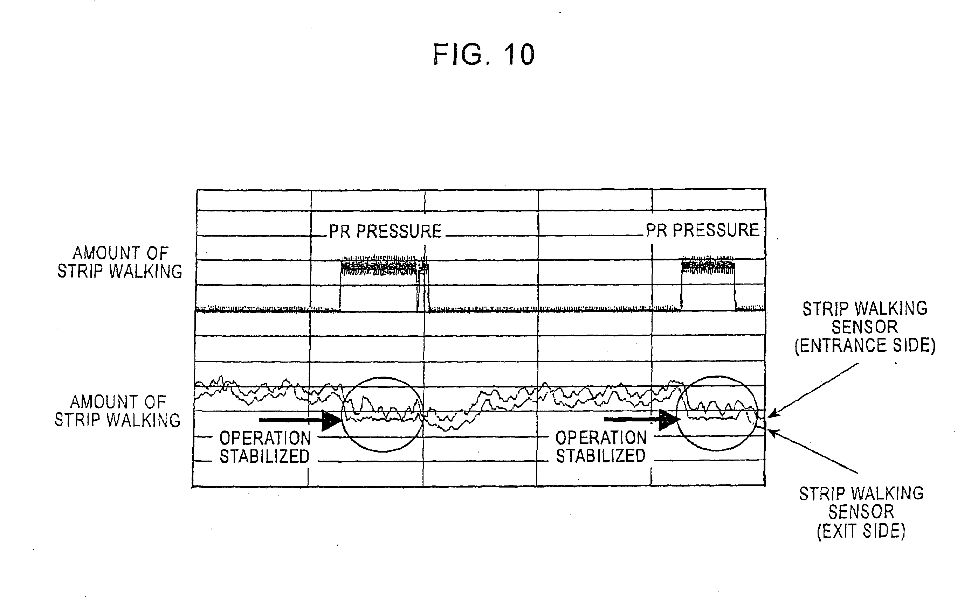

In the model experiments, a model experimental apparatus having the structure illustrated in Fig. 5(a) was manufactured (the external forces F were applied by the outside biased pinch and the pinch rolls including the disc 1A that guides the line-center-side edges of the slit strips was used). In the experiment, only one strip was passed along one side of the disc 1A, and pinch rolls pressure (abbreviated as PR pressure) was intermittently performed while the strip is being passed. The behavior of strip walking of the strip was measured with strip walking sensors provided at the entrance side and the exit side (coiling section) of the pinch rolls. Fig. 10 illustrates an example of the result of the measurement. As is clear from the chart of outputs from the strip walking sensors in Fig. 10, the operation is stabilized at the exit side (coiling section) as a result of the PR pressure. In addition, it is clear that although the strip fluctuates at the entrance side, the strip is centered as a result of the PR pressure.

There are two types of slit-material conveyance lines: conveyance lines that pass only slit materials (referred to as type I for convenience) and conveyance lines that alternately pass slit materials and full-width strips (normal strips) that are not slit (referred to as type II for convenience). In the case of type I, the edge guide may be installed in a fixed state as illustrated in Figs. 5(a) and 5(b). However, in the case of type II, the edge guide is preferably retractable instead of being installed in a fixed state. More specifically, when the slit materials are to be passed, the edge guide moves downward to a vertical position corresponding to the top end of the lower roll and guides the line-center-side edges of the slit materials. When a normal strip is passed without being slit, the edge guide is retracted to the top surface of the normal strip.

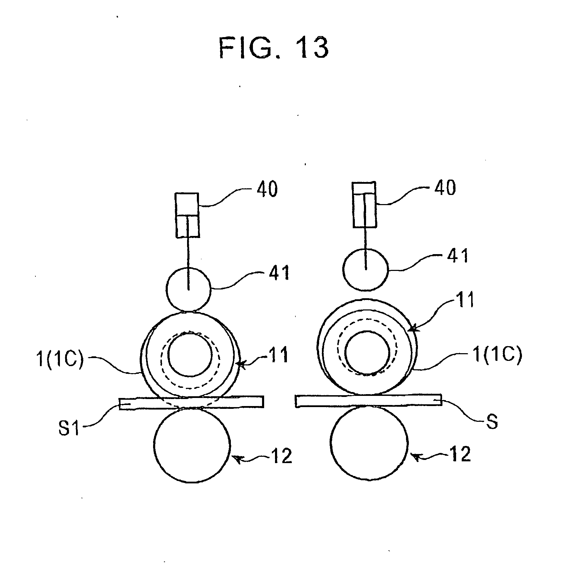

When the edge guide is in contact with the lower roll, the edge guide can reliably guide the strip edges. When the edge guide is installed in a line in which the pass line movement in the vertical direction is small, the edge guide may be arranged such that the lower end thereof is positioned between the top surfaces of the slit materials and the surface of the lower roll. The edge guide may be moved downward by its own weight, or by a pressing mechanism or the like. For example, as illustrated in Fig. 13, a separate ring or a separate disc may be pressed downward by a cylinder including a rod and a small roll attached to an end portion of the rod. The pressing force is set to be small so that the top surface of the normal strip is not deformed or damaged when the normal strip is passed.

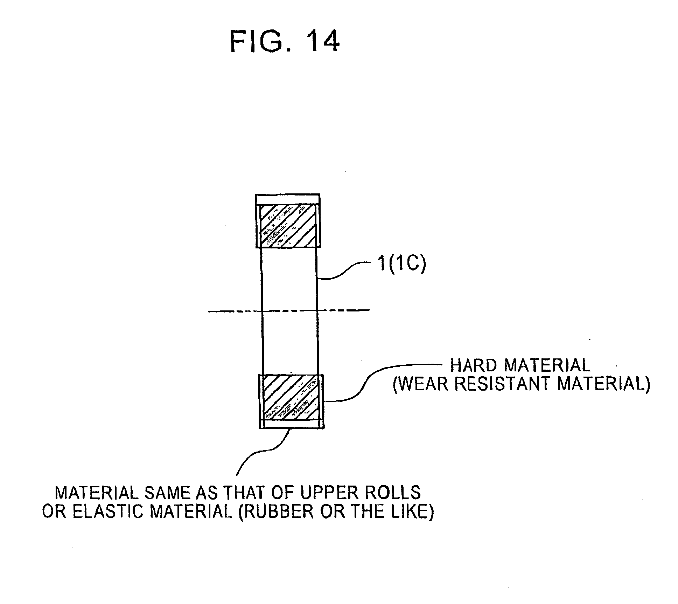

As illustrated in Fig. 14, an outermost peripheral portion of the edge guide, which comes into contact with the normal strip, is formed of the same material as the material of the upper rolls or an elastic body, such as rubber. The side surfaces of the edge guide, which come into contact with the edges of the slit materials, are formed of a high-hardness wear-resistant material.

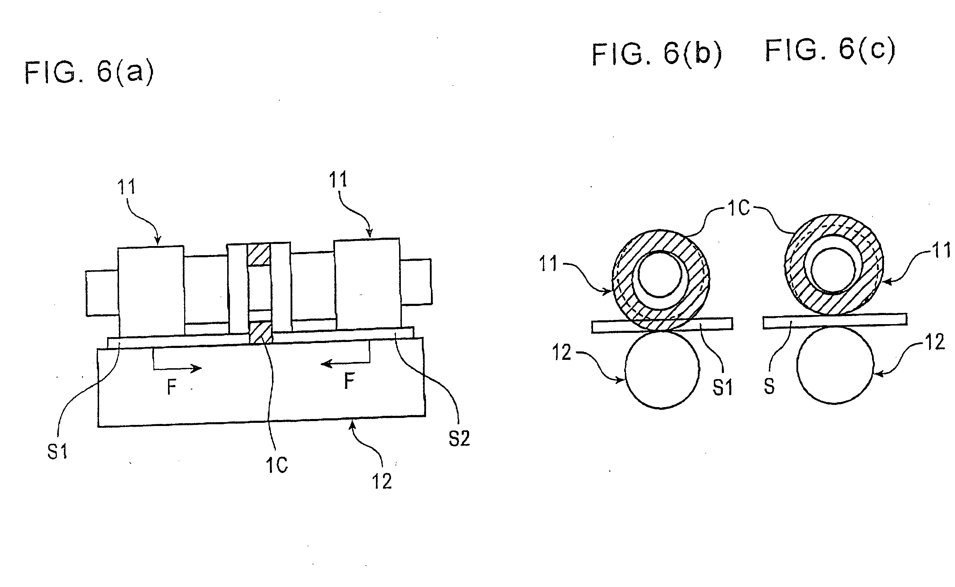

As an example of the above-described edge guide of the retractable type, Figs. 6(a), 6(b), and 6(c) illustrate the structure in which the disc portion of the edge guide illustrated in Fig. 5(b) is changed from the fixed type to the retractable type. In this structure, a movable separate ring 1C that is loosely fitted to a roll shaft of the upper rolls 11 is used as the edge guide (this corresponds to present invention [4]). Since the separate ring 1C is loosely fitted to the roll shaft of the upper rolls 11, when the slit materials S1 and S2 are passed, the separate ring 1C is moved downward through the gap between the strips to the position of contact with the lower roll 12 by its own weight or by the pressing mechanism or the like. Thus, the separate ring 1C guides the line-center-side edges of the slit materials S1 and S2 (Fig. 6(b)). When a normal strip S is passed, the separate ring 1C is retracted to the top surface of the strip (Fig. 6(c)).

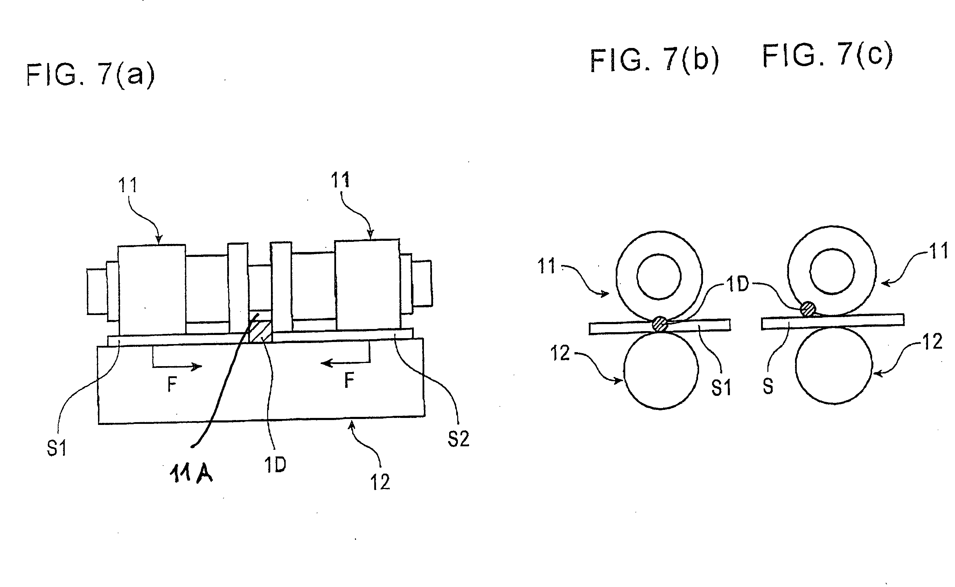

As another example of the above-described edge guide of the retractable type, Figs. 7(a), 7(b), and 7(c) illustrate the structure in which the edge guide is composed of a groove portion 11A provided in a roll shaft of the upper rolls 11 and a movable separate disc 1D that is loosely fitted to the groove portion 11A.

### [Example 1]

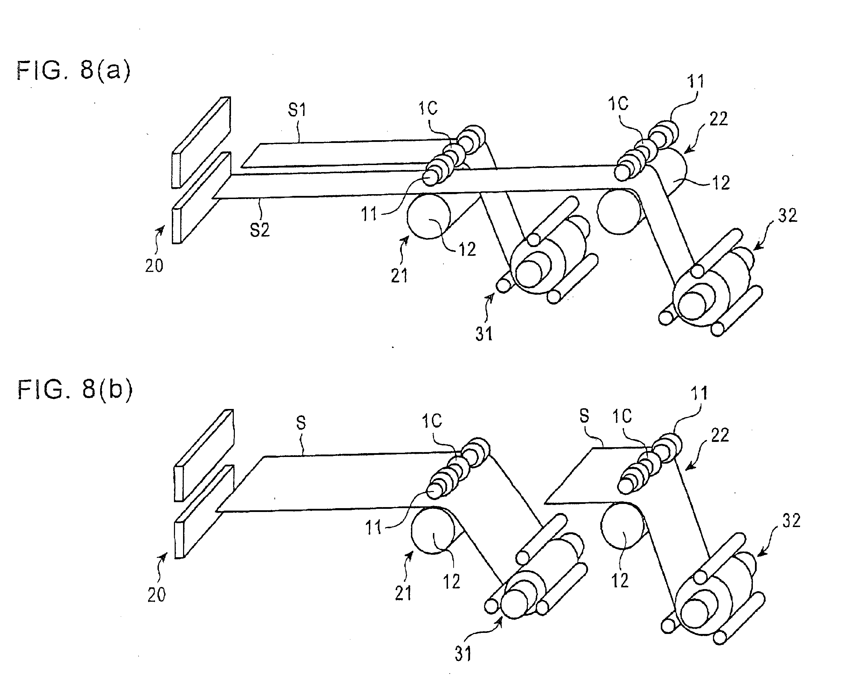

Example 1 is incorporated in a slit line of cold rolled sheet steel. In this slit line, as illustrated in Fig. 8(a), two slit materials S1 and S2 pass through first and second deflector pinch rolls 21 and 22 in an area downstream of a shear 20. Accordingly, the conveying direction of the slit materials S1 and S2 is changed from the horizontal direction to the downward direction. Then, the two slit materials S1 and S2 are coiled around first and second tension reels 31 and 32, respectively. Although the slit material S2 passes the first deflector pinch roll 21 in parallel with the slit material S1 before entering the second deflector pinch roll 22, the conveying direction of the slit material S2 is not changed from the horizontal direction at the first deflector pinch roll 21. In this slit line, as illustrated in Fig. 8(b), a normal strip S may also be passed. In this case, the operation line including the first deflector pinch roll 21 and the first tension reel 31 and the operation line including the second deflector pinch roll 22 and the second tension reel 32 are alternately used to coil the normal strip S. According to the related art, in each of the first and second deflector pinch rolls 21 and 22, both the upper and lower rolls are flat rolls.

In Example 1, rolls having the structure illustrated in Figs. 6(a), 6(b), and 6(c) are used as the first and second deflector pinch rolls 21 and 22. More specifically, the roll diameters of the upper rolls 11 are set to be large at the outer sides of the upper rolls 11 in the line width direction, thereby allowing the outside biased pinch. In addition, the movable separate ring 1C that is loosely fitted to the roll shaft of the upper rolls 11 is used as the edge guide according to the present invention. At the first deflector pinch roll 21, both of the slit materials S1 and S2 are moved toward the line center owing to the outside biased pinch, and the strip edges that have been moved toward the line center are guided by the separate ring 1C. At the second deflector pinch roll 22, only the slit material S2, which has become alone after passing the first deflector pinch roll 21 positioned upstream of the second deflector pinch roll 21, is centered owing to the outside biased pinch. Then, the strip edge that has been moved to the line center is guided by the separate ring 1C.

When the normal strip S is passed, since the movable separate ring 1C is loosely fitted to the roll shaft of the upper rolls 11, the separate ring 1C is automatically retracted to the top surface of the strip.

Sufficient strip-walking preventing effect can be obtained even when the present invention is applied only to the first deflector pinch roll 21. However, when the present invention is applied also to the second deflector pinch roll 22 as in Example 1, the effect can be increased.

### [Example 2]

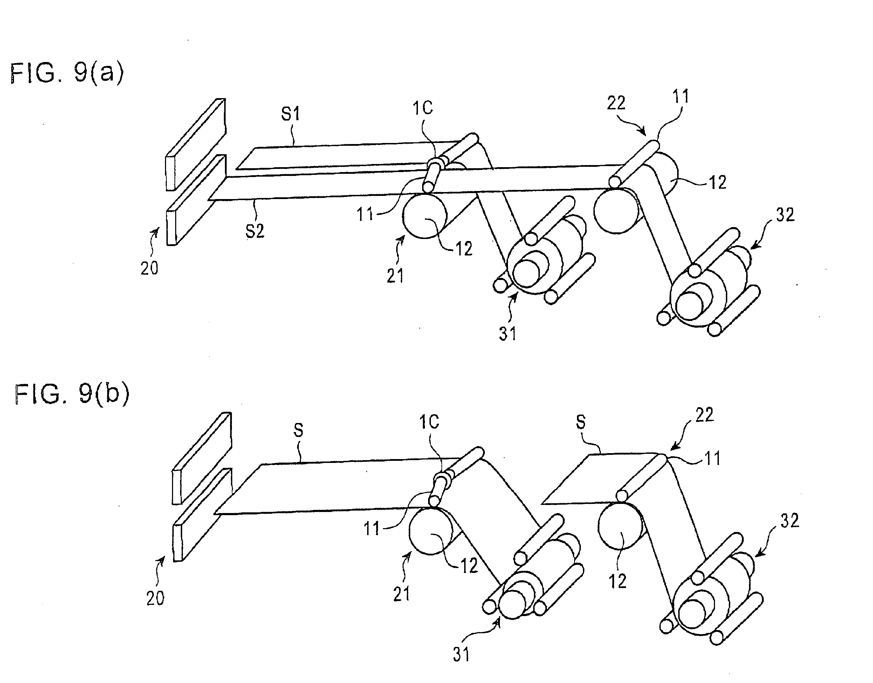

Example 2 is incorporated in the same slit line as that of Example 1. Figs. 9(a) and 9(b) illustrate the structure according to Example 2. As illustrated, a pinch roll according to the related art is used as a second deflector pinch roll 22. A first deflector pinch roll 21 is configured such that two upper rolls 11 are separated from each other in the width direction and are skewed as illustrated in Fig. 3 so that the external forces F are generated owing to the inward skew angle. In addition, the movable separate ring 1C that is loosely fitted to the roll shaft of the upper rolls 11 is used as the edge guide according to the present invention.

The operational effects obtained by Example 2 are similar to those obtained when a pinch roll according to the related art is used as the second deflector pinch roll 22 in Example 1.

### [Reference Signs List]

- 1: edge guide
- 1A: disc
- 1B: tiered disc
- 1B₁: pinch portion
- 1B₂: disc portion
- 1C: separate ring
- 1D: separate disc
- 10: conveying roll
- 11: upper roll
- 11A: groove portion
- 12: lower roll
- 20: shear
- 21: first deflector pinch roll
- 22: second deflector pinch roll
- 31: first tension reel
- 32: second tension reel
- S: strip (full-width strip or normal strip)
- S1, S2: strip (slit strip or slit material)
- SG: side guide

## Claims

1. An apparatus for preventing strip walking which passes at least one slit strip (S1; S2), which is obtained by slitting a single full-width strip (S) into two strips (S1; S2) in a conveyance line, with a pinch roll,
wherein the pinch rolls include a lower roll (12) that is arranged to support a bottom surface of the slit strip (S1; S2) and an upper roll (11) that is arranged to come into contact with a top surface of the slit strip (S1; S2) and move the slit strip toward a line center by using outside biased pinch or an inward skew angle, and
wherein the apparatus for preventing strip walking comprises an edge guide (1) that is arranged to guide a line-center-side edge of the slit strip in and/or near the nip in which the strip is nipped by a central contact zone of the upper roll (11) and the lower roll (12), the central contact zone in use coming into contact with a portion of the slit strip (S1; S2) around the line-center-side edge.

2. The apparatus for preventing strip walking according to Claim 1,
wherein the edge guide (1) is retractable,
wherein the edge guide is movable downward to a position of contact with the lower roll (12) to guide the line-center-side edge of the slit strip (S1; S2) when the slit strip is passed, and
wherein the edge guide (1) is retractable to a top surface of the full-width strip (S) when the full-width strip is passed without being slit.

3. The apparatus for preventing strip walking according to Claim 1,
wherein the edge guide (1) includes a large-diameter disc (1A) that is coaxial with the upper roll (11) and that has a diameter larger than an outer diameter of the upper roll (11) or the edge guide includes a tiered disc (1B) including the large-diameter disc (1B₂) and a contact zone (1B₁) that is provided in place of the central contact zone of the upper roll (11) and that has a diameter smaller than or equal to the outer diameter of the upper roll (11).

4. The apparatus for preventing strip walking according to Claim 2 or 3, wherein the edge guide (1) according to Claim 2 or a disc portion (1B) of the edge guide according to Claim 3 is composed of a movable separate ring (1C) that is loosely fitted to a roll shaft of the upper roll (11).

5. The apparatus for preventing strip walking according to Claim 2, wherein the edge guide (1) includes a groove portion (11A) provided in a roll shaft of the upper roll (11) and a movable separate disc (1D) that is loosely fitted to the groove portion (11A).

## Patentansprüche

1. Vorrichtung, die verhindert, dass sich ein Blechstreifen in Breitenrichtung Hin und Her bewegt, und zwar mit einer Andrückwalze, wobei durch die Vorrichtung mindestens ein Schnittblechstreifen (S1; S2) läuft, den man dadurch erhält, dass ein einzelner Blechstreifen (S) mit voller Breite in einer Beförderungsstraße in zwei Blechstreifen (S1; S2) zerschnitten wird,
wobei die Andrückwalze eine untere Walze (12) enthält, die dafür ausgelegt ist, eine Unterseite des Schnittblechstreifens (S1; S2) zu tragen, und eine obere Walze (11), die dafür ausgelegt ist, eine Oberseite des Schnittblechstreifens (S1; S2) zu berühren und den Schnittblechstreifen zur Straßenmitte zu bewegen, indem eine außenseitig vorbelastete Andrückwalze oder ein Schräglaufwinkel nach innen verwendet wird,
wobei die Vorrichtung, die verhindert, dass sich ein Blechstreifen in Breitenrichtung Hin und Her bewegt, eine Kantenführung (1) umfasst, die dafür ausgelegt ist, eine Kante auf der Straßenmittenseite des Schnittblechstreifens in und/oder nahe an einem Berührbereich zu führen, in dem der Blechstreifen von einer zentralen Berührzone der oberen Walze (11) und der unteren Walze (12) berührt wird, wobei die zentrale Berührzone im Gebrauch einen Teil des Schnittblechstreifens (S1; S2) in der Nähe der Kante auf der Straßenmittenseite berührt.

2. Vorrichtung nach Anspruch 1, die verhindert, dass sich ein Blechstreifen in Breitenrichtung Hin und Her bewegt, wobei:
die Kantenführung (1) zurückgezogen werden kann,
die Kantenführung in eine Berührposition mit der unteren Walze (12) nach unten beweglich ist, damit die Kante auf der Straßenmittenseite des Schnittblechstreifens (S1; S2) geführt wird, wenn der Schnittblechstreifen durchläuft, und
die Kantenführung (1) auf die Oberseite des Blechstreifens (S) mit voller Breite zurückgezogen werden kann, wenn der Blechstreifen mit voller Breite durchläuft, ohne dass er zerschnitten wird.

3. Vorrichtung nach Anspruch 1, die verhindert, dass sich ein Blechstreifen in Breitenrichtung Hin und Her bewegt,
wobei die Kantenführung (1) eine Scheibe (1A) mit großem Durchmesser enthält, die koaxial zur oberen Walze (11) angeordnet ist und einen Durchmesser aufweist, der größer ist als der Außendurchmesser der oberen Walze (11), oder die Kantenführung eine gestufte Scheibe (1B) enthält, die die Scheibe (1B2) mit großem Durchmesser und eine Berührzone (1B1) enthält, die anstelle der zentralen Berührzone der oberen Walze (11) bereitgestellt ist und die einen Durchmesser hat, der kleinergleich dem Außendurchmesser der oberen Walze (11) ist.

4. Vorrichtung nach Anspruch 2 oder 3, die verhindert, dass sich ein Blechstreifen in Breitenrichtung Hin und Her bewegt, wobei die Kantenführung (1) nach Anspruch 2 oder ein Scheibenteil (1B) der Kantenführung nach Anspruch 3 aus einem beweglichen separaten Ring (1C) aufgebaut ist, der lose in einer Walzenwelle der oberen Walze (11) sitzt.

5. Vorrichtung nach Anspruch 2, die verhindert, dass sich ein Blechstreifen in Breitenrichtung Hin und Her bewegt, wobei die Kantenführung (1) einen Nutabschnitt (11A) enthält, der sich in einer Walzenwelle der oberen Walze (11) befindet, und eine bewegliche separate Scheibe (1 D), die lose in dem Nutabschnitt (11A) sitzt.

## Revendications

1. Appareil de prévention du serpentage de bande qui fait passer au moins une bande fendue (S1 ; S2) qui est obtenue en fendant une bande unique de pleine largueur (S) en deux bandes (S1 ; S2) dans une ligne de convoyage, avec un rouleau de pincement,
où le rouleau de pincement comprend un rouleau inférieur (12) qui est agencé pour supporter une surface inférieure de la bande fendue (S1 ; S2) et un rouleau supérieur (11) qui est agencé pour venir en contact avec une surface supérieure de la bande fendue (S1 ; S2) et pour déplacer la bande fendue vers un centre de ligne en utilisant un pincement sollicité vers l'extérieur ou un angle d'inclinaison vers l'intérieur, et
où l'appareil de prévention du serpentage de bande comprend un guide de bord (1) qui est agencé pour guider un bord côté centre de ligne de la bande fendue dans et/ou près du pincement dans lequel la bande est serrée par une zone de contact centrale du rouleau supérieur (11) et du rouleau inférieur (12) ; la zone de contact centrale, en cours d'utilisation, venant en contact avec une portion de la bande fendue (S1 ; S2) autour du bord côté centre de ligne.

2. Appareil de prévention du serpentage de bande selon la revendication 1,
dans lequel le guide de bord (1) est rétractable,
dans lequel le guide de bord est déplaçable vers le bas à une position de contact avec le rouleau inférieur (12) pour guider le bord côté centre de ligne de la bande fendue (S1 ;S2) lorsque la bande fendue est amenée à passer, et
où le guide de bord (1) est rétractable à une surface supérieure de la bande de pleine largueur (S) lorsque la bande de pleine largueur est amener à passer sans être fendue.

3. Appareil de prévention du serpentage de bande selon la revendication 1,
dans lequel le guide de bord (1) comprend un disque d'un grand diamètre (1A) qui est coaxial avec le rouleau supérieur (11) et qui a un diamètre plus grand qu'un diamètre extérieur du rouleau supérieur (11), ou le guide de bord comprend un disque graduel (1B) incluant un disque d'un grand diamètre (1B₂) et une zone de contact (1B₁) qui est réalisée à la place de la zone de contact centrale du rouleau supérieur (11) et qui a un diamètre plus petit ou égal au diamètre extérieur du rouleau supérieur (11).

4. Appareil de prévention du serpentage de bande selon la revendication 2 ou 3, dans lequel le guide de bord (1) selon la revendication 2 ou une portion de disque (1B) du guide de bord selon la revendication 3 est constitué d'un anneau mobile séparé (1C) qui est lâchement ajusté sur un arbre de rouleau du rouleau supérieur (11).

5. Appareil de prévention du serpentage de bande selon la revendication 2, dans lequel le guide de bord (1) comprend une portion rainurée (11A) réalisée dans un arbre de rouleau du rouleau supérieur (11) et un disque mobile séparée (1D) qui est lâchement ajusté sur la portion rainurée (11A).
